# EUROPÄISCHE PATENTSCHRIFT

(11) **EP 1 773 636 B1**
(45) Veröffentlichungstag und Bekanntmachung des Hinweises auf die Patenterteilung: **14.10.2009**
(21) Anmeldenummer: 05779844.9
(22) Anmeldetag: 04.08.2005
(51) Int. Cl.: B60T 13/46, B60T 17/02

(54) **VORRICHTUNG ZUR BEREITSTELLUNG VON DRUCK FÜR EINE BETÄTIGUNGSEINHEIT EINER FAHRZEUGBREMSANLAGE UND VERFAHREN ZUM STEUERN DER VORRICHTUNG**
DEVICE FOR SUPPLYING PRESSURE TO AN ACTUATION UNIT OF A MOTOR VEHICLE BRAKING SYSTEM AND METHOD FOR CONTROLLING SAID DEVICE
DISPOSITIF DE DELIVRANCE DE PRESSION A UNE UNITE DE COMMANDE D'UN SYSTEME DE FREINAGE D'UN VEHICULE AUTOMOBILE ET PROCEDE DE COMMANDE DE CE DISPOSITIF

(30) Priorität: 06.08.2004 DE 102004038549; 01.08.2005 DE 102005036615
(43) Veröffentlichungstag der Anmeldung: 18.04.2007
(73) Patentinhaber: Continental Teves AG & Co. oHG, 60488 Frankfurt (DE)
(72) Erfinder: RÜFFER, Manfred, 65843 Sulzbach (DE); FACHINGER, Georg, 65549 Limburg (DE); WAHL, Holger, 65510 Wallrabenstein (DE); ALBRICH VON ALBRICHSFELD, Christian, 64283 Darmstadt (DE); KARL, Uwe, 65185 Wiesbaden (DE)
(86) Internationale Anmeldenummer: PCT/EP2005/053835
(87) Internationale Veröffentlichungsnummer: WO 2006/032571

(56) Entgegenhaltungen:
- DE-A1- 10 341 678
- DE-A1- 19 929 880
- US-A- 5 515 676

## Beschreibung

Die Erfindung betrifft eine Vorrichtung zur Bereitstellung von Druck für eine Betätigungseinheit einer Fahrzeugbremsanlage, insbesondere für eine Fahrzeugbremsanlage vom Typ "Brake-by-wire", umfassend ein pneumatisches Motor-Pumpen-Aggregat mit einer Pumpe und einem die Pumpe antreibenden Motor, wobei das Motor-Pumpen-Aggregat abhängig von einem Druckniveau bzw. Druckunterschied in einem pneumatischen Bremskraftverstärker der Betätigungseinheit durch eine elektronische Steuereinheit angesteuert wird, wobei das Druckniveau in einer Kammer bzw. ein Druckunterschied zwischen zwei Kammern des Bremskraftverstärkers mittels eines Sensors erfasst wird.

Eine derartige Vorrichtung und ein Verfahren zum Bereitstellen von Unterdruck in einem Fahrzeug ist beispielsweise aus der DE 199 29 880 A1 bekannt, wobei die das Motor-Pumpen-Aggregat eine Unterdruckpumpe umfasst, welche zusätzlich abhängig von Betriebeszuständen der Antriebseinheit aktiviert wird.

Fahrzeugbremsanlagen vom Typ "Brake-by-wire" sind fahrerwunschabhängig mittels einer elektronischen Steuereinheit (ECU), d.h. fahrerunabhängig, als auch teilweise mittels eines Bremspedals (mechanische Rückfallebene) betätigbar. Nachteilig bei Systemen ohne verstärkte mechanische Rückfallebene ist, dass die Betriebsbremsfunktion, also die verstärkte Bremsung nur bei Vorhandensein der elektrischen Energieversorgung gegeben ist. Ein Ausfall der elektrischen Energieversorgung oder ein Fehler in der elektrischen Steuereinheit führt dazu, dass beispielsweise bei einem hydraulischen Brake-by-wire-Bremssystem, also bei einer EHB, nur noch eine unverstärkte Bremsung unter Einhaltung der gesetzlichen Randbedingungen (0,3 g mit 500 N Fußkraft) möglich ist. Im allgemeinen ist die Ausfallwahrscheinlichkeit der elektronischen Komponenten, insbesondere der elektrischen Energieversorgung, höher als die der konventionellen, mechanischen Bremsenkomponenten, so dass erhöhte technische Maßnahmen getroffen werden müssen, um die Verfügbarkeit einer Brake-by-wire-Fahrzeugbremsanlage in Bezug auf die Betriebsbremsfunktion ähnlich hoch zu halten, wie bei einer konventionellen Fahrzeugbremsanlage.

Durch die Verwendung einer regenerativen Bremse basierend auf einem fahrerunabhängig ansteuerbaren Bremskraftverstärker wird unter anderem auch diese Zielsetzung, die Erhöhung der Verfügbarkeit der Betriebsbremsfunktion im Vergleich zu einer EHB verfolgt. Diese regenerative Bremse wird hauptsächlich in Hybrid- und Elektrofahrzeugen eingesetzt. Ist diese Bremse für Hybridfahrzeuge mit einem Elektromotor und einem Verbrennungsmotor vorgesehen, so ergeben sich Betriebszustände, bei denen der Verbrennungsmotor kein Druck für die Betätigungseinheit liefert und daher eine elektrisch angetriebene Pumpe notwendig wird.

Insbesondere bei reinen Elektrofahrzeugen muss der benötigte Druck allein über eine solche Pumpe erzeugt werden. Somit ist die Betriebsbremsfunktion wiederum von der Verfügbarkeit des Bordnetzes abhängig. Aus Kostengründen wird oftmals versucht, die Steuerung der Vakuumpumpe über die ECU des Bremssystems vorzunehmen, wodurch die Betriebsbremsfunktion auch von der Verfügbarkeit des Bremsensteuergeräts abhängig ist.

Aufgabe der vorliegenden Erfindung ist es daher, die Verfügbarkeit der Betriebsbremsfunktion möglichst hoch zu halten und dabei eine möglichst hohe Redundanz insbesondere in Bezug auf Fehler oder Ausfall der Elektronik oder des Bordnetzes zu erhalten.

Die Aufgabe wird dadurch gelöst, dass die Steuereinheit zur Ansteuerung des Motor-Pumpen-Aggregats ein Logikmodul und ein Leistungsmodul aufweist, welche getrennt voneinander vorgesehen sind. Dadurch wird erreicht, dass sich Fehler des einen Moduls nicht zwangsweise auf das andere Modul auswirken und die Betriebsbremsfunktion dadurch nicht gezwungenermaßen ausfällt.

Eine Redundanz in der Stromversorgung der beiden Module wird dadurch erzielt, dass das Logikmodul und das Leistungsmodul getrennt voneinander an ein Bordnetz des Fahrzeuges angeschlossen sind.

Vorteilhafte Weiterbildungen der Erfindung sehen vor, dass die Steuereinheit zur Ansteuerung des Motor-Pumpen-Aggregates und des Bremssystems oder zur Ansteuerung eines Motors des Fahrzeuges vorgesehen ist, dass das Logikmodul in der Steuereinheit angeordnet und dass das Leistungsmodul außerhalb der Steuereinheit vorgesehen ist. Hierdurch kann auf eine separate Steuereinheit für das Motor-Pumpen-Aggregat verzichtet und Mehrkosten für zusätzliche Bauteile, Failsafe etc. eingespart werden. Das Logikmodul zur Ansteuerung des Motor-Pumpen-Aggregates kann nahezu ohne Zusatzaufwand in die bereits vorhandene Steuereinheit des Bremssystems integriert werden. Dagegen beinhaltet das Leistungsmodul große Elektronikkomponenten, wie beispielsweise Relais oder MOSFETs, und benötigt einen entsprechend großen Bauraum, so dass dieses vorzugsweise an dem Motor-Pumpen-Aggregat oder in einer anderen Steuereinheit des Fahrzeuges vorgesehen ist. Dabei ist ebenfalls von Vorteil, dass eine hohe Erwärmung des Leistungsmoduls keine Auswirkungen auf die Steuereinheit des Motor-Pumpen-Aggregates und des Bremssystems oder auf die Steuereinheit des Motors hat, da bei der Integration des Leistungsmoduls in die Steuereinheit entsprechende bauliche Maßnahmen zur Abführung der Wärme aus der Steuereinheit notwendig würden.

Um ein separates Gehäuse einzusparen, ist als Leistungsmodul beispielsweise in bevorzugter Ausführungsform ein Relais vorgesehen, welches in einem Relaiskasten des Fahrzeuges angeordnet ist.

Gemäß einer anderen vorteilhaften Ausführungsform ist als Leistungsmodul ein Halbleiterelement, vorzugsweise ein FET vorgesehen, welches in einem Relaiskasten des Fahrzeugs angeordnet ist.

Weiter wird ein Verfahren zum Steuern einer erfindungsgemäßen Vorrichtung vorgeschlagen, dessen Besonderheit darin besteht, dass das Motor-Pumpen-Aggregat bei einem Ausfall der Steuereinheit eingeschaltet wird. Hierdurch wird die Bereitstellung von Druck für den Bremskraftverstärker sichergestellt. Dabei kann das Motor-Pumpen-Aggregat bei einem Ausfall der Steuereinheit vorzugsweise durch einen stromlos geschlossenen Schalter eingeschaltet werden.

Eine weitere vorteilhafte Ausführungsform des erfindungsgemäßen Verfahrens sieht vor, dass das Motor-Pumpen-Aggregat bei einem Ausfall der Steuereinheit durch Betätigung eines Sensors zur Erfassung eines Bremspedalweges- beispielsweise durch Betätigung eines Bremslichtschalters - eingeschaltet wird und bei Nichtbetätigung des Sensors ausgeschaltet ist, wobei der Sensor mit einem Steuergerät einer Antriebseinheit des Fahrzeuges verbunden ist. Es wird also ein Bremswunsch des Fahrers erkannt und durch die Ansteuerung des Motor-Pumpen-Aggregats der für die verstärkte Bremsung benötigte Druck im Bremskraftverstärker bereitgestellt.

Zur Schonung des Motor-Pumpen-Aggregats und zur Reduzierung der Erwärmung wird in vorteilhafter Weiterbildung des erfindungsgemäßen Verfahrens vorgeschlagen, dass das Motor-Pumpen-Aggregat bei einem Ausfall der Steuereinheit getaktet betrieben wird.

Um den benötigten Druck im Bremskraftverstärker auch nach eines Bremsvorganges weiter aufrechtzuerhalten, bleibt gemäß einer weiteren vorteilhaften Ausführungsform das Motor-Pumpen-Aggregat nach der Betätigung des Sensors zur Erfassung des Bremspedalweges eine vorbestimmte Zeit eingeschaltet.
Ist das Fahrzeug als Hybridfahrzeug mit einem Verbrennungsmotor und einem Elektromotor vorgesehen, wird vorteilhafterweise bei einem Fehler der Steuereinheit, welche das Motor-Pumpen-Aggregat ansteuert, ein Signal an eine Motor-Steuereinheit weitergeleitet und der Verbrennungsmotor geht in einen Betriebszustand über, in dem die Bereitstellung des Druckes für die Betätigungseinheit allein durch den Verbrennungsmotor erfolgt. Dies bedeutet, dass der Verbrennungsmotor des Hybridfahrzeuges in keinem Betriebszustand ausgeschaltet wird, um die notwendige Druckversorgung des Bremskraftverstärkers zu gewährleisten.

Weist die Fahrzeugbremsanlage ein optimiertes hydraulisches Bremssystem (OHB) auf, welches eine hydraulische Druckerhöhungseinheit umfasst, die abhängig von einem Druckunterschied zwischen Kammern des Bremskraftverstärkers eine zusätzliche Bremskraftverstärkung durchführt, wobei der Druckunterschied von einem Vakuumsensor erfasst wird, wird erfindungsgemäß vorgeschlagen, dass die Ansteuerung des Motor-Pumpen-Aggregats durch eine separate Pumpen-Steuereinheit und einen separaten Sensor erfolgt, welcher zusätzlich zu dem Vakuumsensor das Druckniveau des Bremskraftverstärkers erfasst, und dass das Motor-Pumpen-Aggregat über eine getrennte Leitung an das Bordnetz des Kraftfahrzeuges angeschlossen ist. Dadurch wird ein von dem Bremssystem unabhängiger Betrieb des Motor-Pumpen-Aggregats ermöglicht. Um Komponenten einzusparen ist es jedoch möglich, dass die Ansteuerung des Motor-Pumpen-Aggregats nicht mittels eines separaten Sensors sondern mittels des Vakuumsensors erfolgt.

Zur Sicherung der Redundanz kann die Ansteuerung des Motor-Pumpen-Aggregats mittels eines als Relais oder FET vorgesehenen Leistungsmoduls mit separater Stromversorgung und die Signalauslesung des Vakuumsensors des OHB-Systems durch die Pumpen-Steuereinheit und/oder einer Bremsen-Steuereinheit erfolgen. Werden die Signale nur durch eine der Steuereinheiten ausgelesen, werden die Signale vorzugsweise über eine Busverbindung der jeweils anderen Steuereinheit zur Verfügung gestellt.

Wird das Signal durch die Bremsen-Steuereinheit ausgelesen, wird gemäß einer vorteilhaften Weiterbildung des erfindungsgemäßen Verfahrens das Motor-Pumpen-Aggregat bei Ausfall der Bremsen-Steuereinheit voll angesteuert, um die Druckversorgung in jedem Fall sicherzustellen.

Nachstehend wird die Erfindung anhand der Zeichnung erläutert, welche Ausführungsbeispiele zeigt. Es zeigt:
- Figur 1: einen schematischen Systemaufbau eines ersten Ausführungsbeispieles einer erfindungsgemäßen Vorrichtung;
- Figur 2: einen schematischen Systemaufbau eines zweiten Ausführungsbeispieles einer erfindungsgemäßen Vorrichtung und
- Figur 3: einen schematischen Systemaufbau eines dritten Ausführungsbeispieles einer erfindungsgemäßen Vorrichtung.

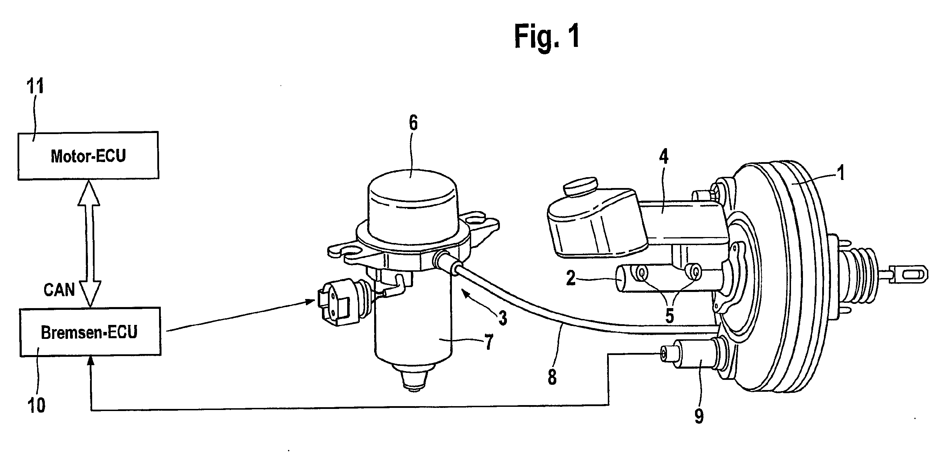

Fig. 1 zeigt einen schematischen Systemaufbau eines ersten Ausführungsbeispieles einer erfindungsgemäßen Vorrichtung zur Bereitstellung von Druck für eine Betätigungseinheit einer Fahrzeugbremsanlage vom Typ "Brake-by-wire". Es ist ersichtlich, dass die Betätigungseinheit einen pneumatischen Bremskraftverstärker 1, einen daran angeordneten Hauptbremszylinder 2. Fahrzeugbremsanlagen vom Typ "Brake-by-wire" sind fahrerwunschabhängig mittels einer elektronischen Steuereinheit (ECU), d.h. fahrerunabhängig, als auch teilweise mittels eines nicht dargestellten Bremspedals (mechanische Rückfallebene) betätigbar.

Der grundsätzliche Aufbau und die Funktion der Betätigungseinheit sind allgemein bekannt, so dass nachstehend nur die erfindungswesentlichen Merkmale beschrieben werden.

Ein nicht gezeigter Innenraum des Bremskraftverstärkers 1 wird durch wenigstens eine bewegliche Wand in wenigstens zwei Kammern unterteilt. Bei einem Unterdruckbremskraftverstärker ist der Innenraum in wenigstens eine Unterdruckkammer und wenigstens eine Arbeitskammer und bei einem Überdruckbremskraftverstärker in wenigstens eine Kammer höheren Druckes und wenigstens eine Kammer niedrigeren Druckes unterteilt. Der Hauptbremszylinder 2 weist zwei in einem Gehäuse verschiebbare, nicht gezeigte Kolben auf, welche zusammen mit dem Gehäuse jeweils einen hydraulischen Druckraum begrenzen. Die Druckräume sind mit einem drucklosen Druckmittelbehälter 4 und über Ausgänge 5 mit nicht dargestellten Radbremsen der Fahrzeugbremsanlage verbindbar.

Ein pneumatisches Motor-Pumpen-Aggregat 3 umfasst eine Pumpe 6 und einen die Pumpe 6 antreibenden Motor 7, welcher beispielsweise als Elektromotor vorgesehen ist. Je nachdem, ob der Bremskraftverstärker 1 mit Unter- oder Überdruck betrieben wird, ist die Pumpe 6 als Unterdruckpumpe oder als Überdruckpumpe ausgebildet, wobei dies für die Erfindung allerdings nicht wesentlich ist. Deshalb wird in der nachfolgenden Beschreibung lediglich von einem Unterdruckbremskraftverstärker mit einer Unterdruck- und einer Arbeitskammer und von einer Unterdruckpumpe ausgegangen. Der Bremskraftverstärker kann dabei als Single- oder Tandem-Gerät ausgeführt sein.

Um dem Bremskraftverstärker 1 Unterdruck bereitzustellen, ist die Unterdruckpumpe 6 über eine Saugleitung 8 mit der nicht dargestellten Unterdruckkammer des Bremskraftverstärkers 1 verbunden. Ein an dem Bremskraftverstärker 1 oder der Unterdruckpumpe 6 angeordneter Sensor 9 erfasst ein Unterdruckniveau in der Unterdruckkammer bzw. eine Druckdifferenz zwischen Unterdruckkammer und Arbeitskammer, wobei dieser erfasste Druck in einer elektronischen Bremsen-Steuereinheit (Bremsen-ECU) 10 ausgewertet wird. Der Sensor 9 kann im Rahmen der Erfindung auch in der Saugleitung 8 angeordnet sein.

Das Motor-Pumpen-Aggregat 3 wird direkt von der Bremsen-ECU 10 angesteuert, welche beispielsweise als ESP-Steuereinheit eines geregelten Bremssystems mit Elektronischem-Stabilitäts-Programm (ESP) vorgesehen sein kann. Zur Ansteuerung weist die Bremsen-ECU 10 ein nicht dargestelltes Logikmodul und ein nicht dargestelltes Leistungsmodul auf, wobei die beiden Module getrennt voneinander vorgesehen sind, um Auswirkungen von Fehlern in einem der Module auf das andere Modul vermeiden zu können. Dies bedeutet, dass die Betriebsfunktion, d.h. die verstärkte Bremsung der Bremsanlage, nicht zwangsweise bei einem Fehler in einem der Module ausfällt. Um eine zusätzliche Redundanz in der Stromversorgung zu erhalten, sind die beiden Module getrennt voneinander an einem Bordnetz des Fahrzeuges angeschlossen.

Das Logikmodul, welches vornehmlich die Software zur Ansteuerung des Motor-Pumpen-Aggregats 3 umfasst, kann dabei nahezu ohne Zusatzaufwand in die Bremsen-ECU 10 integriert werden.

Das Leistungsmodul, welches die Schaltungseinheit für die Ansteuerung umfasst und beispielsweise als Relais oder MOSFET vorgesehen sein kann, ist außerhalb der Bremsen-ECU 10 angeordnet, da es durch die Elektronikkomponenten einen zusätzlichen Bauraum in Anspruch nimmt. Ferner hat die separate Anordnung den zusätzlichen Vorteil, dass eine hohe Erwärmung des Leistungsmoduls keine Auswirkungen auf die Bremsen-ECU 10 hat. Denn eine zusätzliche Erwärmung der Bremsen-ECU 10 würde entsprechende bauliche Maßnahmen zur Abführung der Wärme notwendig werden lassen. Das Leistungsmodul kann entweder an dem Motor-Pumpen-Aggregat 3, an einer weiteren Steuereinheit des Fahrzeuges, in einem Relaiskasten des Fahrzeuges oder zwischen der Bremsen-ECU 10 und dem Motor 7 angeordnet werden. Durch die letztere Anordnung im Relaiskasten ist es außerdem möglich, ein Gehäuse für das Leistungsmodul einzusparen.

Wie aus Fig. 1 ersichtlich ist, ist die Bremsen-ECU 10 über ein Bussystem CAN (Controller Area Network) mit einer elektronischen Motor-Steuereinheit (Motor-ECU) 11 verbunden. Darüber hinaus können die Bremsen-ECU 10 und die Motor-ECU 11 über CAN mit weiteren Steuereinheiten im Fahrzeug verbunden sein.

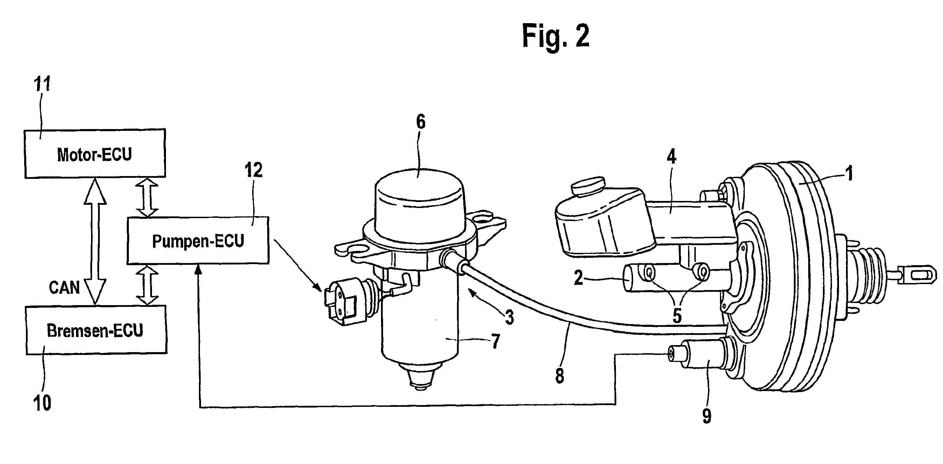

Fig. 2 zeigt einen schematischen Systemaufbau eines zweiten Ausführungsbeispieles einer erfindungsgemäßen Vorrichtung zur Bereitstellung von Druck für eine Betätigungseinheit einer Fahrzeugbremsanlage vom Typ "Brake-by-wire". Diese unterscheidet sich zu dem ersten Ausführungsbeispiel lediglich darin, dass zur Ansteuerung des Motor-Pumpen-Aggregats 3 eine separate Pumpen-ECU 12 vorgesehen ist, welche das Signal des Sensors 9 einliest und die über CAN mit der Bremsen-ECU 10 und der Motor-ECU 11 verbunden ist. Hierdurch ist eine zusätzliche Ansteuerung des Motor-Pumpen-Aggregats 3 über die Bremsen-ECU 10 möglich. Das Logikmodul und das Leistungsmodul sind ebenfalls separat voneinander vorgesehen und die Stromversorgung der Module erfolgt getrennt. Auch bei diesem Ausführungsbeispiel kann das Logikmodul in der Pumpen-ECU 12 und das Leistungsmodul außerhalb Pumpen-ECU 12, beispielsweise in dem Relaiskasten, vorgesehen sein.

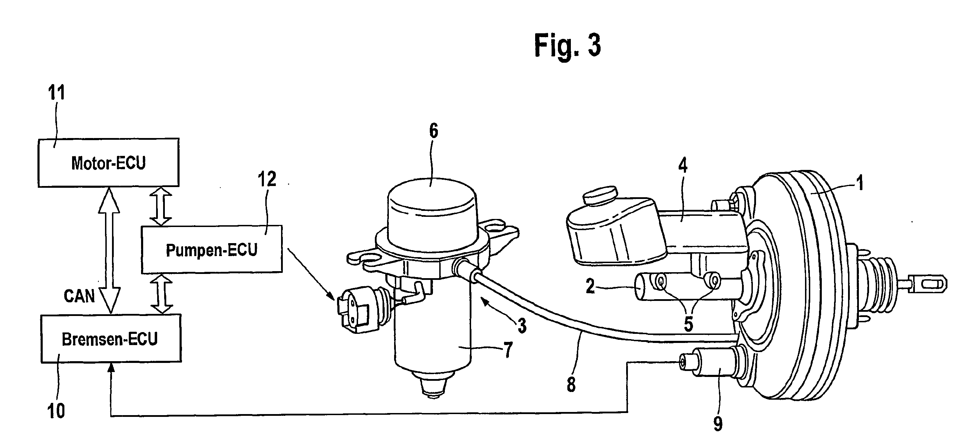

Eine weitere Möglichkeit zur Signalauslesung des Sensors 9 besteht gemäß einem, in Fig. 3 dargestellten dritten Ausführungsbeispiel darin, dass die Bremsen-ECU 10 die Signale des Sensors 9 ausliest und entsprechende Signale über die CAN-Verbindung der Pumpen-ECU 12 zur Verfügung stellt.

Bei allen beschriebenen Ausführungsbeispielen wird das Motor-Pumpen-Aggregat 3 bei einem Ausfall der ansteuernden Steuereinheit 10,12 eingeschaltet, um die Bereitstellung von Druck für den Bremskraftverstärker 1 sicherzustellen. Dabei kann das Motor-Pumpen-Aggregat 3 bei einem Ausfall der Steuereinheit beispielsweise durch einen stromlos geschlossenen Schalter eingeschaltet werden.

Eine weitere Möglichkeit besteht darin, dass das Motor-Pumpen-Aggregat 3 bei einem Ausfall der ansteuernden Steuereinheit 10,12 durch Betätigung eines Sensors zur Erfassung eines Bremspedalweges, beispielsweise eines Bremslichtschalters, eingeschaltet und bei Nichtbetätigung des Sensors ausgeschaltet wird, wobei der Sensor unabhängig von der Steuereinheit 10,12 von der Motor-ECU 11 eingelesen wird.

Zur Schonung und zur Reduzierung der Erwärmung kann das Motor-Pumpen-Aggregat 3 bei einem Ausfall der Steuereinheit getaktet betrieben wird.

Ist das Fahrzeug als Hybridfahrzeug mit einem Verbrennungsmotor und einem Elektromotor vorgesehen, wird bei einem Fehler der Steuereinheit (Bremsen-ECU 10 oder separate Pumpen-ECU 12), welche das Motor-Pumpen-Aggregat 3 ansteuert, ein Signal an die Motor-ECU 11 weitergeleitet und der Verbrennungsmotor geht in einen Betriebszustand über, in dem die Bereitstellung des Druckes für die Betätigungseinheit allein durch den Verbrennungsmotor erfolgt. Dies bedeutet, dass der Verbrennungsmotor des Hybridfahrzeuges in keinem Betriebszustand ausgeschaltet wird, um die notwendige Druckversorgung des Bremskraftverstärkers 1 zu gewährleisten.

Bei einem Hybridfahrzeug wird zur Energieeinsparung vornehmlich eine so genannte regenerative Bremse verwendet, wobei die kinetische Energie des rollenden Fahrzeuges beim Bremsen in elektrische Energie umgewandelt wird, die durch ein intelligentes Energiemanagement zwischengespeichert und beim Anfahren oder Beschleunigen in einen Antriebsstrang eingespeist wird, wodurch der Verbrennungsmotor entlastet wird. Dabei sind alle beschriebenen Ausführungsbeispiele der erfindungsgemäßen Vorrichtung bei einem Hybridfahrzeug einsetzbar.

Weist die Fahrzeugbremsanlage zur Erhöhung der Verfügbarkeit der Betriebsbremsfunktion ein optimiertes hydraulisches Bremssystem (OHB) auf, welches eine hydraulische Druckerhöhungseinheit umfasst, die abhängig von einem Druckunterschied zwischen Kammern des Bremskraftverstärkers eine zusätzliche Bremskraftverstärkung durchführt, wird der Druckunterschied von einem an dem Bremskraftverstärker angeordneten Vakuumsensor erfasst. Die Druckerhöhungseinheit ist beispielsweise als Pumpe vorgesehen, welche den Druck in Radbremskreisen moduliert. Dadurch kann die Verstärkung auch über einen Aussteuerpunkt des Bremskraftverstärkers hinaus aufrecht erhalten, eine hydraulische Bremsassistent-Funktion dargestellt bzw. eine Kompensation eines Bremskraftverstärkerausfalls erzielt werden.

Die Ansteuerung des Motor-Pumpen-Aggregats 3 kann durch die gemäß Fig. 2 und 3 beschriebenen, separate Pumpen-Steuereinheit und den beschriebenen Sensor 9 erfolgen, wobei der Sensor 9 zusätzlich zu dem nicht dargestellten Vakuumsensor des OHB-Systems das Druckniveau des Bremskraftverstärkers erfasst. Das Motor-Pumpen-Aggregat 3 ist über eine getrennte Leitung an das Bordnetz des Kraftfahrzeuges angeschlossen, wodurch ein von dem Bremssystem unabhängiger Betrieb des Motor-Pumpen-Aggregats 3 ermöglicht wird.

Um Komponenten einzusparen ist es jedoch möglich, dass die Ansteuerung des Motor-Pumpen-Aggregats nicht mittels des separaten Sensors 9 sondern mittels des Vakuumsensors erfolgt. Hierbei kann zur Sicherung der Redundanz die Ansteuerung des Vakuumsensors mittels des als Relais vorgesehenen Leistungsmoduls mit separater Stromversorgung und die Signalauslesung durch die Pumpen-ECU 12 und der Bremsen-ECU 10 erfolgen. Werden die Signale nur durch eine der Steuereinheiten 10 oder 12 ausgelesen, werden die Signale über die CAN-Verbindung der jeweils anderen Steuereinheit zur Verfügung gestellt.

Wird das Signal durch die Bremsen-ECU 10 ausgelesen, ist es sinnvoll, das Motor-Pumpen-Aggregat 3 bei Ausfall der Bremsen-ECU 10 voll angesteuert wird, um die Druckversorgung in jedem Fall sicherzustellen.

### Bezugszeichenliste

- 1: Bremskraftverstärker
- 2: Hauptbremszylinder
- 3: Motor-Pumpen-Aggregat
- 4: Druckmittelbehälter
- 5: Ausgang
- 6: Pumpe
- 7: Motor
- 8: Saugleitung
- 9: Sensor
- 10: Bremsen-Steuereinheit
- 11: Motor-Steuereinheit
- 12: Pumpen-Steuereinheit

## Patentansprüche

1. Vorrichtung zur Bereitstellung von Druck für eine Betätigungseinheit einer Fahrzeugbremsanlage, insbesondere für eine Fahrzeugbremsanlage vom Typ "Brake-by-wire", umfassend ein pneumatisches Motor-Pumpen-Aggregat (3) mit einer Pumpe (6) und einem die Pumpe (6) antreibenden Motor (7), wobei das Motor-Pumpen-Aggregat (3) abhängig von einem Druckniveau bzw. Druckunterschied in einem pneumatischen Bremskraftverstärker (1) der Betätigungseinheit durch eine elektronische Steuereinheit (10,11,12) angesteuert wird, wobei das Druckniveau in einer Kammer bzw. ein Druckunterschied zwischen zwei Kammern des Bremskraftverstärkers (1) mittels eines Sensors (9) erfasst wird, **dadurch gekennzeichnet, dass** die Steuereinheit (10,11,12) zur Ansteuerung des Motor-Pumpen-Aggregats (3) ein Logikmodul und ein Leistungsmodul aufweist, welche getrennt voneinander vorgesehen sind.

2. Vorrichtung nach Anspruch 1, **dadurch gekennzeichnet, dass** das Logikmodul und das Leistungsmodul getrennt voneinander an ein Bordnetz des Fahrzeuges angeschlossen sind.

3. Vorrichtung nach Anspruch 1 oder 2, **dadurch gekennzeichnet, dass** die Steuereinheit (10) zur Ansteuerung des Motor-Pumpen-Aggregates (3) und des Bremssystems vorgesehen ist, dass das Logikmodul in der Steuereinheit (10) angeordnet ist und dass das Leistungsmodul außerhalb der Steuereinheit (10) vorgesehen ist.

4. Vorrichtung nach Anspruch 1 oder 2, **dadurch gekennzeichnet, dass** die Steuereinheit (11) zur Ansteuerung eines Motors des Fahrzeuges vorgesehen, dass das Logikmodul in der Steuereinheit (11) angeordnet ist und dass das Leistungsmodul außerhalb der Steuereinheit (11) vorgesehen ist.

5. Vorrichtung nach Anspruch 3 oder 4, **dadurch gekennzeichnet, dass** das Leistungsmodul an dem Motor-Pumpen-Aggregat (3) angeordnet ist.

6. Vorrichtung nach Anspruch 3 oder 4, **dadurch gekennzeichnet, dass** das Leistungsmodul in einer weiteren Steuereinheit des Fahrzeuges angeordnet ist.

7. Vorrichtung nach Anspruch 3 oder 4, **dadurch gekennzeichnet, dass** als Leistungsmodul ein Relais vorgesehen ist, welches in einem Relaiskasten des Fahrzeugs angeordnet ist.

8. Vorrichtung nach Anspruch 3 oder 4, **dadurch gekennzeichnet, dass** als Leistungsmodul ein Halbleiterelement, vorzugsweise ein FET vorgesehen ist, welches in einem Relaiskasten des Fahrzeugs angeordnet ist.

9. Verfahren zum Steuern einer Vorrichtung nach einem der Ansprüche 1 bis 8, **dadurch gekennzeichnet, dass** das Motor-Pumpen-Aggregat (3) bei einem Ausfall der Steuereinheit (10,12) eingeschaltet wird.

10. Verfahren nach Anspruch 9, **dadurch gekennzeichnet, dass** das Motor-Pumpen-Aggregat (3) bei einem Ausfall der Steuereinheit (10,12) durch einen stromlos geschlossenen Schalter eingeschaltet wird.

## Claims

1. Device for supplying pressure to an actuation unit of a vehicle brake system, in particular for a vehicle brake system of the "brake-by-wire" type, comprising a pneumatic motor-pump assembly (3) having a pump (6) and a motor (7) which drives the pump (6), wherein the motor-pump assembly (3) is actuated by an electronic control unit (10, 11, 12) as a function of a pressure level or pressure difference in a pneumatic brake booster (1) of the actuation unit, wherein a sensor (9) senses the pressure level in a chamber or a pressure difference between two chambers of the brake booster (1), **characterized in that** the control unit (10, 11, 12) has, for actuating the motor-pump assembly (3), a logic module and a power module which are provided separately from one another.

2. Device according to Claim 1, **characterized in that** the logic module and the power module are connected, separately from one another, to an on-board power system of the vehicle.

3. Device according to Claim 1 or 2, **characterized in that** the control unit (10) is provided for actuating the motor-pump assembly (3) and the brake system, **in that** the logic module is arranged in the control unit (10), and **in that** the power module is provided outside the control unit (10).

4. Device according to Claim 1 or 2, **characterized in that** the control unit (11) is provided for actuating a motor of the vehicle, **in that** the logic module is arranged in the control unit (11), and **in that** the power module is provided outside the control unit (11).

5. Device according to Claim 3 or 4, **characterized in that** the power module is arranged on the motor-pump assembly (3).

6. Device according to Claim 3 or 4, **characterized in that** the power module is arranged in a further control unit of the vehicle.

7. Device according to Claim 3 or 4, **characterized in that** a relay is provided as a power module and is arranged in a relay box of the vehicle.

8. Device according to Claim 3 or 4, **characterized in that** a semiconductor element, preferably an FET, is provided as a power module and is arranged in a relay box of the vehicle.

9. Method for controlling a device according to one of Claims 1 to 8, **characterized in that** the motor-pump assembly (3) is switched on if the control unit (10, 12) fails.

10. Method according to Claim 9, **characterized in that** if the control unit (10, 12) fails, the motor-pump assembly (3) is switched on by a switch which is closed in the currentless state.

## Revendications

1. Dispositif pour délivrer une pression pour une unité d'actionnement d'un équipement de freinage de véhicule, notamment pour un équipement de freinage de véhicule de type « freinage câblé », comprenant un groupe moteur-pompe pneumatique (3) avec une pompe (6) et un moteur (7) qui entraîne la pompe (6), le groupe moteur-pompe (3) étant commandé par une unité de commande électronique (10, 11, 12) en fonction d'un niveau de pression ou d'une différence de pression dans un amplificateur de force de freinage (1) pneumatique de l'unité d'actionnement, le niveau de pression dans une chambre ou une différence de pression entre deux chambres de l'amplificateur de force de freinage (1) étant détecté au moyen d'un capteur (9), **caractérisé en ce que** l'unité de commande (10, 11, 12), pour commander le groupe moteur-pompe (3), présente un module logique et un module de puissance qui sont prévus séparés l'un de l'autre.

2. Dispositif selon la revendication 1,
**caractérisé en ce que** le module logique et le module de puissance sont raccordés séparément l'un de l'autre à un réseau de bord du véhicule.

3. Dispositif selon la revendication 1 ou 2,
**caractérisé en ce que** l'unité de commande (10) est prévue pour commander le groupe moteur-pompe (3) et le système de freinage, que le module logique est disposé dans l'unité de commande (10) et que le module de puissance est prévu à l'extérieur de l'unité de commande (10).

4. Dispositif selon la revendication 1 ou 2,
**caractérisé en ce que** l'unité de commande (11) est prévue pour commander un moteur du véhicule, que le module logique est disposé dans l'unité de commande (11) et que le module de puissance est prévu en-dehors de l'unité de commande (11).

5. Dispositif selon la revendication 3 ou 4,
**caractérisé en ce que** le module de puissance est disposé sur le groupe moteur-pompe (3).

6. Dispositif selon la revendication 3 ou 4,
**caractérisé en ce que** le module de puissance est disposé dans une autre unité de commande du véhicule.

7. Dispositif selon la revendication 3 ou 4,
**caractérisé en ce que** le module de puissance prévu est un relais qui est disposé dans un coffret à relais du véhicule.

8. Dispositif selon la revendication 3 ou 4,
**caractérisé en ce que** le module de puissance prévu est un élément à semiconducteur, de préférence un FET qui est disposé dans un coffret à relais du véhicule.

9. Procédé pour commander un dispositif selon l'une des revendications 1 à 8, **caractérisé en ce que** le groupe moteur-pompe (3) est mis en marche en cas de panne de l'unité de commande (10, 12).

10. Procédé selon la revendication 9, **caractérisé en ce que** le groupe moteur-pompe (3) est mis en marche par un commutateur fermé au repos en cas de panne de l'unité de commande (10, 12).
